# EUROPÄISCHE PATENTANMELDUNG

(11) **EP 4 491 328 A1**
(43) Veröffentlichungstag der Anmeldung: **15.01.2025**
(21) Anmeldenummer: 24187789.3
(22) Anmeldetag: 10.07.2024
(51) Int. Cl.: B24B 53/00, B24D 3/00, B24D 3/02, B24D 3/06, B24D 5/00, B24D 5/02

(54) **SCHLEIFSCHEIBE, SCHLEIFMASCHINE UND VERFAHREN ZUM ABRICHTEN EINER SCHLEIFSCHEIBE**

(30) Priorität: 13.07.2023 DE 102023118650
(71) Anmelder: Fritz Studer AG, 3612 Steffisburg (CH)
(72) Erfinder: Karabulut, Ali, 6010 Kriens (CH)
(74) Vertreter: Witte, Weller & Partner Patentanwälte mbB

(57) **Zusammenfassung**

Eine insbesondere zum elektroerosiven Abrichten geeignete Schleifscheibe (24) weist eine Drehachse (136) und einen Schleifbelag (142) mit einer makroskopischen Matrix (154) auf. Die Schleifscheibe (24) ist um die Drehachse (136) rotierbar. In die makroskopische Matrix (154) sind Schleifkörner (156) eingebettet. Die makroskopische Matrix (154) ist leitfähig. Die Schleifkörner (156) weisen eine leitfähige mikroskopische Matrix (164) auf, in die Schneidpartikel (166) eingebettet sind. Eine Schleifmaschine (10) nutzt eine solche zum elektroerosiven Abrichten geeignete Schleifscheibe (24). Ein Verfahren dient zum Abrichten einer solchen Schleifscheibe (24) mittels Draht-Elektroerosion.

## Beschreibung

Die vorliegende Offenbarung bezieht sich auf eine Schleifscheibe, insbesondere eine zum elektroerosiven Abrichten geeignete Schleifscheibe, mit einer Mittenbohrung, die eine Drehachse zur Rotation der Schleifscheibe definiert, und einen Schleifbelag mit einer makroskopischen Matrix, in die Schleifkörner eingebettet sind, wobei die makroskopische Matrix leitfähig ist. Die vorliegende Offenbarung bezieht sich ferner auf eine Schleifmaschine mit einer solchen Schleifscheibe, wobei die Schleifmaschine insbesondere mit einer elektroerosiven Abrichtvorrichtung zum Abrichten der Schleifscheibe versehen oder gekoppelt ist. Ferner bezieht sich die vorliegende Offenbarung auf ein Verfahren zum Abrichten einer Schleifscheibe mittels Draht-Elektroerosion.

Die JP 2002 - 370 172 A bezieht sich auf die Zusammensetzung einer leitfähigen Schleifscheibe für das Elektroerosionsschleifen sowie auf Ansätze zur Herstellung einer solchen. Die Schleifscheibe weist eine Nickelschicht, die durch Erhitzen und Zersetzen auf eine Oberfläche eines Binders aufgebracht wird, und Borcarbid-Schleifkorn auf. Die Anwesenheit der Nickelschicht soll eine Reduzierung der Menge des verwendeten Borcarbid-Schleifkorns ermöglichen. Die Abtragsleistung des Borcarbid-Schleifkorns soll an diejenige von Titankarbid und Wolframkarbid heranreichen. Selbst im Falle einer Ablösung der Nickelschicht soll das Borcarbid-Schleifkorn für die Aufrechterhaltung der elektrischen Leitfähigkeit sorgen.

Die JP 2002 - 370 172 A offenbart eine Schleifscheibe mit makroskopischer Matrix, die eine Mehrzahl monolithischer Schleifkörner aufweist, die von einer Nickelschicht umgeben sind. Die Schleifkörner sind nicht weiter in eine mikroskopische Matrix unterteilt.

Aus der DE 10 2015 121 316 A1 ist eine Schleifscheibe zur Bearbeitung eines Werkstücks bekannt, mit einem um eine Drehachse rotierbaren Grundkörper, einer elektrisch leitfähigen Werkzeugfläche zum Materialabtrag am Werkstück, und einer Funktionsfläche, die mit der Werkzeugfläche elektrisch verbunden ist, zur elektrischen Kontaktierung der Werkzeugfläche während einer Drehung des Werkzeugs, wobei die Funktionsfläche bezüglich der Drehachse axial auf einer Stirnseite oder radial auf einem Absatz des Grundkörpers angeordnet ist.

Aus der EP 2 607 006 A1 ist eine Vorrichtung zum Abrichten von Schleifscheiben mittels Drahterodieren bekannt. Aus der DE 10 2015 104 405 A1 ist eine Drahtführung zur Führung einer Drahtelektrode beim Drahterodieren bekannt.

Bei der Schleifbearbeitung wird mittels Abrichten ein genauer Rundlauf und eine korrekte geometrische Form der Schleifscheibe sichergestellt. Zudem kann das Abrichten dazu genutzt werden, eine Schleifscheibe zu profilieren und/oder zu schärfen. Mit dem Abrichten können ferner Verunreinigungen der Schleifscheibe entfernt werden. Schließlich lassen sich mit dem Abrichten auch stumpf gewordene Schleifkörner aus dem Schleifkörper herausbrechen, wodurch die Schleifscheibe geschärft wird.

Bei dem sogenannten drahterosiven Abrichten handelt es sich um ein elektroerosives Verfahren. Es geht jedoch nicht um die Bearbeitung von Werkstücken (vergleiche auch das sogenannte elektrochemische Schleifen). Stattdessen geht es um das Abrichten von Schleifscheiben, die dann wiederum zur Schleifbearbeitung von Werkstücken nutzbar sind.

Das drahterosive Abrichten beruht auf dem Drahterodieren. Es ist üblicherweise eine Abrichtvorrichtung mit einem Abrichtdraht und einem Antrieb für den Abrichtdraht vorgesehen. Der Drahtantrieb zieht den Abrichtdraht beispielsweise von einer Spule ab und befördert ihn über Stromzuführungen und eine dünne Drahtführungsscheibe mit umlaufender Nut an der Schleifscheibe vorbei. Die Schleifscheibe rotiert dabei mit einer relativ hohen Umfangsgeschwindigkeit. Die Erosionsstelle wird üblicherweise mit einem dielektrischen Spülmedium gespült. Der jeweils zuvor genutzte Abschnitt des Abrichtdrahts wird üblicherweise zerkleinert und entsorgt.

Der Materialabtrag an der Schleifscheibe erfolgt üblicherweise berührungslos durch extrem kurze, schnell aufeinanderfolgende Gleichstrompulse, die in einem kleinen Spalt zwischen Elektrode (Abrichtdraht) und Schleifscheibe im Dielektrikum eine Entladung erzeugen. Während der Entladung werden winzige Bereiche eines leitfähigen Bindermaterials der Schleifscheibe geschmolzen und am Ende der Funkenentladung als kleine Fragmente aus dem Spalt gespült. Durch den Materialabtrag bildet sich ein kleiner Krater an der Oberfläche der Schleifscheibe. Durch stetige Wiederholung entsteht ein stetiger Abtrag an der Oberfläche der Schleifscheibe. Die Schleifkörner bleiben vom Erosionsprozess unbeeinflusst in ihrer Gestalt erhalten.

Es gibt also üblicherweise einen Entladungsspalt und somit keine mechanische Berührung zwischen dem Abrichtdraht und dem Schleifkorn bzw. dem Binder im Schleifbelag der Schleifscheibe. Wenn die Schleifkörner von der Bindung freigelegt sind, können sie ohne wesentliche Krafteinwirkung gelöst werden oder gar herausfallen.

Es hat sich gezeigt, dass mit dem drahterosiven Abrichten verschiedene Vorteile erzielt werden können. Dies bezieht sich beispielsweise auf die Möglichkeit zum Abrichten von Schleifscheiben mit besonders harten Schleifmitteln (beispielsweise Diamant basierte oder Bornitrit basierte Schleifmittel). Die Bindung der Schleifkörner im Schleifbelag erfordert als Voraussetzung für das drahterosive Abrichten ein leitfähiges Bindermaterial. Abgesehen vom Verschleiß des Abrichtdrahts hält sich der Verschleiß bei der Abrichtvorrichtung in Grenzen. Mit einer Abrichtvorrichtung können unterschiedliche Profile erzeugt und abgerichtet werden. Die Abrichtvorrichtung kann in die Schleifmaschine integriert werden. Auch externe Abrichtvorrichtungen sind vorstellbar.

Das drahterosive Abrichten eignet sich beispielsweise für Schleifscheiben für das Außenschleifen/Außenrundschleifen sowie für das Innenschleifen/Innenrundschleifen. Mittels drahterosivem Abrichten abrichtbare Schleifscheiben können besonders harte Schleifmittel/Schneidstoffe aufweisen. Hierdurch eignen sich die Schleifscheiben beispielsweise zur Hartbearbeitung. Dies kann beispielhaft Werkstücke aus gehärtetem Stahl, Hartmetall, keramischen Werkstoffen und Ähnliches umfassen.

Es hat sich jedoch auch gezeigt, dass die Oberflächengüte nach dem elektroerosiven Abrichten unter Umständen noch nicht gut genug für bestimmte Anwendungen ist. Die Oberflächengüte wird beispielhaft durch die Korngröße des genutzten Schleifkorns beeinflusst.

Vor diesem Hintergrund liegt der Offenbarung die Aufgabe zugrunde, eine insbesondere zum elektroerosiven Abrichten geeignete Schleifscheibe anzugeben, die eine hohe Oberflächenqualität gewährleistet, welche durch das elektroerosive Abrichten nicht nachteilig beeinflusst wird. Bei der anschließenden Bearbeitung von Werkstücken mit der Schleifscheibe sollen sich gute Oberflächengüten erreichen lassen. Gleichwohl soll eine möglichst hohe Abtragsleistung und/oder Standzeit der Schleifscheibe erzielt werden. Auch soll die abgerichtete Schleifscheibe eine hohe Maßhaltigkeit aufweisen. Die Schleifscheibe soll möglichst zur Bearbeitung von Werkstoffen geeignet sein, die hinsichtlich des Schleifprozesses als problematisch gelten.

Gemäß einem ersten Aspekt bezieht sich die vorliegende Offenbarung auf eine Schleifscheibe, insbesondere eine zum elektroerosiven Abrichten geeignete Schleifscheibe, die Folgendes aufweist:
- eine Drehachse, um die die Schleifscheibe rotierbar ist, und
- einen Schleifbelag mit einer makroskopischen Matrix, in die Schleifkörner eingebettet sind,
   wobei die makroskopische Matrix leitfähig ist, und
   wobei die Schleifkörner eine leitfähige mikroskopische Matrix aufweisen, in die Schneidpartikel eingebettet sind.

Auf diese Weise kann beim elektroerosiven Abrichten sowohl in der makroskopischen Matrix als auch in der mikroskopischen Matrix ein Materialabtrag erfolgen. Der Materialabtrag in der mikroskopischen Matrix (innerhalb eines Schleifkorns) erlaubt beispielsweise ein Lösen einer Teilmenge der Schneidpartikel innerhalb eines Schleifkorns von der Oberfläche des Schleifkörpers der Schleifscheibe.

Im Rahmen der vorliegenden Offenbarung werden die Begriffe makroskopisch und mikroskopisch nicht notwendigerweise in ihrer engen Bedeutung auf dem Gebiet der Optik/Physik verwendet. Stattdessen geht es darum, dass die mikroskopische Matrix jeweils Bestandteil von Einzelkomponenten in der makroskopischen Matrix ist. Einzelkomponenten in der makroskopischen Matrix weisen üblicherweise eine größere Korngröße als Einzelkomponenten in der mikroskopischen Matrix auf. Es gibt also eine Hierarchie zwischen der makroskopischen Matrix und der mikroskopischen Matrix, die sich in erster Linie aus der Korngröße ergibt. Beispielhaft liegt eine Größenordnung zwischen den in die makroskopische Matrix eingebetteten Schleifkörnern und den innerhalb der Schleifkörner in die dortige Matrix eingebetteten Schneidpartikeln.

Auf diese Weise können beim elektroerosiven Abrichten Schleifkörner, die bei konventionell gestalteten Schleifscheiben teilweise an der Oberfläche des Schleifkörper herausragen würden, durch Lösen einzelner Schneidpartikel teilweise abgetragen werden. Dies sorgt insgesamt für eine bessere Oberfläche. Die Oberflächenqualität bei der anschließenden Werkstückbearbeitung mit der Schleifscheibe kann sich erhöhen.

Bei konventionell gestalteten Schleifscheiben, die durch elektroerosives Abrichten abgerichtet werden, werden Schleifkörner überwiegend oder ausschließlich im gesamten vom Schleifbelag gelöst. Dies kann dazu führen, dass an der Oberfläche des Schleifbelags unerwünschte Vertiefungen entstehen. Dies kann jedoch auch dazu führen, dass einzelne Schleifkörner beträchtlich über die gewünschte Soll-Kontur an der Oberfläche des Schleifbelags überstehen. Dies ist etwa dann der Fall, wenn durch das elektroerosive Abrichten der Binder der makroskopischen Matrix um das einzelne Schleifkorn herum schon ein Stück weit abgetragen ist, wenn aber das Schleifkorn selbst noch nicht soweit freigelegt ist, dass es aus dem Schleifbelag gelöst werden kann. Ein solches (deutlich) überstehendes Schleifkorn kann wiederum bei der anschließenden Bearbeitung des Werkstücks mit der Schleifscheibe zu Riefen, Kratzern und ähnlichem führen und die Oberflächengüte negativ beeinflussen. Mit offenbarungsgemäßen Schleifscheiben lassen sich hier Verbesserungen erzielen.

Im Rahmen der vorliegenden Offenbarung wird also vorgeschlagen, Schleifbeläge von Schleifscheiben so zu gestalten, dass das Abrichten zu einem Materialabtrag sowohl bei der makroskopischen Matrix (Binder für Schleifkörner) als auch bei der mikroskopischen Matrix (Binder für Schneidpartikel innerhalb eines Schleifkorns) führt.

Im Rahmen der vorliegenden Offenbarung handelt es sich bei einer Matrix um ein Material (Binder), in das Schleifmittel eingebettet sind. Bei der makroskopischen Matrix sind Schleifkörner in den Binder eingebettet. Die Schleifkörner weisen jeweils eine mikroskopische Matrix auf. Bei der mikroskopischen Matrix sind Schneidpartikel in den dortigen Binder eingebettet, um ein Schleifkorn zu bilden. Ein Schleifkorn weist also eine Mehrzahl von Schneidpartikel auf, die Ihnen eine mikroskopische Matrix eingebettet sind.

Die Schleifscheibe weist eine Mittenbohrung zur Verbindung der Schleifscheibe mit einer Schleifspindel auf. Die Schleifscheibe kann durch die Schleifspindel um ihre Drehachse rotiert werden, die üblicherweise mit der Längsachse der Schleifspindel zusammenfällt. Zumindest die mikroskopische Matrix und die makroskopische Matrix sind zu Zwecken des elektroerosiven Abrichtens leitfähig gestaltet. Die Schleifscheibe weist ferner eine (elektrische) Kontaktierung auf, damit die gewünschten Pulse zwischen Schleifscheibe und Abrichtdraht erzeugt werden können.

Gemäß einer beispielhaften Ausgestaltung weist die makroskopische Matrix einen leitfähigen Binder auf, insbesondere eine Metallbindung oder eine leitfähige Hybridbindung, mit eingebetteten Schleifkörnern. Mit anderen Worten handelt es sich bei der Schleifscheibe beispielsweise um eine Schleifscheibe mit metallgebundenen Schleifkörnern. Es kann sich bei der Matrix beispielsweise um eine Sinter-Metallbindung handeln. Es sind auch sogenannte Hybridbindungen denkbar, die gleichwohl leitfähig sind. Hybridbindungen umfassen beispielsweise Kunstharz-Metall-Bindungen, Keramik-Metall-Bindungen und/oder Hartmetall-Bindungen.

Gemäß einer weiteren beispielhaften Ausgestaltung weist die mikroskopische Matrix innerhalb eines Schleifkorns mehre Schneidpartikel auf, die durch einen elektrisch leitenden Binder miteinander verbunden sind. Es gibt also innerhalb eines Schleifkorns eine Substruktur mit einer ebenso leitfähigen mikroskopischen Matrix, wodurch auch innerhalb eines Schleifkorns ein Abtrag erfolgen kann.

Gemäß einer weiteren beispielhaften Ausgestaltung weist der elektrisch leitende Binder der mikroskopischen Matrix ein Metall, Halbmetall oder Übergangsmetall auf. Gemäß einer weiteren beispielhaften Ausgestaltung weist der elektrisch leitende Binder der mikroskopischen Matrix Bor oder Kobalt auf. Bei Bor handelt es sich um ein sogenanntes Halbmetall. Bei Kobalt handelt es sich um ein sogenanntes Übergangsmetall. Entsprechende Binder der mikroskopischen Matrix können zu Zwecken des elektroerosiven Abrichtens hinreichend leitfähig gestaltet sein. Gemäß einer weiteren beispielhaften Ausgestaltung weist der elektrisch leitende Binder der mikroskopischen Matrix Bronze als Binder oder Bestandteil des Binders auf.

Gemäß einer weiteren beispielhaften Ausgestaltung sind die Schleifkörner als polykristallines Korn gestaltet. Mit anderen Worten bestehen die Schleifkörner jeweils aus einer Vielzahl oder Mehrzahl kleinerer Schneidpartikel. Ein polykristallines Korn kann auch als mikrokristalline Korn bezeichnet werden. Die Schneidpartikel sind in eine leitfähige mikroskopische Matrix eingebettet, so dass einzelne oder mehrere Schneidpartikel gelöst werden können, wenn durch das elektroerosive Abrichten Material der mikroskopischen Matrix abgetragen wird.

Gemäß einer weiteren beispielhaften Ausgestaltung sind die Schleifkörner als polykristallines Diamantkorn, Naturdiamanten und/oder polykristallines kubisches Bornitridkorn gestaltet. Polykristallines Diamantkorn (PKD) oder polykristallines kubisches Bornitridkorn (PCBN) sind geeignete Schleifmittel. Entsprechende Schneidpartikel können in eine mikroskopische Matrix eingebettet werden, um Schleifkörner auszubilden, die wiederum in eine makroskopische Matrix eingebettet werden.

Gemäß einer weiteren beispielhaften Ausgestaltung weisen die Schleifkörner in der makroskopischen Matrix eine erste Korngröße auf, wobei die Schneidpartikel innerhalb der Schleifkörner eine zweite Korngröße aufweisen, und wobei die erste Korngröße größer als die zweiten Korngröße ist. Gemäß einer weiteren beispielhaften Ausgestaltung beträgt die erste Korngröße mindestens das Dreifache der zweiten Korngröße.

Der Begriff "Korngröße" ist dem Fachmann auf dem Gebiet der Schleifmittel geläufig. Beispielsweise werden Korngrößenangaben der FEPA (Federation of European Producers of Abrasives) genutzt, wobei Körnungen für Schleifkörper als FEPA F bezeichnet werden. Der Begriff "Korngröße" zur Angabe der Körnung bezieht sich beispielsweise auf das größte Korn einer gegebenen Körnung, beispielsweise in Mikrometern (Micron). Anders gesagt können also die Körner einer Körnung maximal bis zur genannten Korngröße groß sein. Ferner gibt es Angaben für die Körnung, die sich auf eine bestimmte Dichte von Maschen eines Siebes (mesh) beziehen, durch das das behandelte Korn gerade noch fallen kann. Eine solche Angabe bezieht sich beispielsweise auf die Anzahl der Maschen eines Siebes auf 1,0 Zoll (25,4 mm) Länge. Dem Fachmann sind Tabellen bekannt, mit deren Hilfe Größenangaben für das Schleifkorn umgerechnet werden können. Für eine Körnung kann auch ein Bereich angegeben werden, also ein Größtmaß und ein Kleinstmaß. Die Körner der Körnung sind dann innerhalb des Größenbereichs angesiedelt.

Gemäß einer weiteren beispielhaften Ausgestaltung weist die erste Korngröße eine Körnung von mindestens 20 Mikrometer (Mikron, µm), vorzugsweise eine Körnung von mindestens 35 Mikrometer (Mikron, µm), weiter bevorzugt eine Körnung von mindestens 50 Mikrometer (Mikron, µm) auf. Dies bezieht sich jeweils auf das größte Korn der Körnung der Schleifscheibe. Bei einer Körnung von mindestens 20 µm liegen beispielsweise Schleifkörner in einem Größenbereich von 10-20 µm vor, weil sich die Angabe der Körnung auf das größte Schleifkorn einer Körnung bezieht. Bei einer Körnung von mindestens 35 µm liegen daher beispielsweise Schleifkörner in einem Größenbereich von 25-35 µm vor. Bei einer Körnung von mindestens 50 µm liegen daher beispielsweise Schleifkörner in einem Größenbereich von 40-50 µm vor. Die erste Körnung kann auch als Makrokörnung bezeichnet werden.

Gemäß einer weiteren beispielhaften Ausgestaltung weist die zweite Korngröße eine Körnung von maximal 10 Mikrometer (Mikron, µm), vorzugsweise eine Körnung von maximal 5 Mikrometer (Mikron, µm), weiter bevorzugt eine Körnung von maximal 3 Mikrometer (Mikron, µm) auf. Bei einer Körnung von maximal 10 µm liegen beispielsweise Schneidpartikel in einem Größenbereich von 6-10 µm vor. Bei einer Körnung von maximal 5 µm liegen beispielsweise Schneidpartikel in einem Größenbereich von 1-5 µm vor. Bei einer Körnung von maximal 3 µm liegen beispielsweise Schneidpartikel in einem Größenbereich von 0,5-3 µm vor. Die zweite Korngröße, also die Körnung der in die zweite Matrix eingebetteten Schneidpartikel kann auch als Mikrokörnung bezeichnet werden.

Gemäß einer weiteren beispielhaften Ausgestaltung beträgt ein Volumenanteil der Schleifkörner an der makroskopischen Matrix mindestens 30 Vol.-%, vorzugsweise mindestens 50 Vol.-%. Damit kann einerseits eine gute Eignung zum Abrichten und andererseits eine hohe Schleifleistung erzielt werden.

Gemäß einer weiteren beispielhaften Ausgestaltung beträgt ein Volumenanteil der Schneidpartikel an der mikroskopischen Matrix mindestens 50 Vol.-%, vorzugswiese mindestens 70 Vol.-%. Damit kann einerseits eine gute Eignung zum Abrichten und andererseits eine hohe Schleifleistung erzielt werden.

Gemäß einem weiteren Aspekt bezieht sich die vorliegende Offenbarung auf eine Schleifmaschine, insbesondere eine Rundschleifmaschine, mit einer um eine Längsachse rotierbaren Werkstückspindel zur Aufnahme eines Werkstücks und einer um eine Längsachse rotierbaren Werkzeugspindel, wobei die Werkzeugspindel mit einer zum elektroerosiven Abrichten geeigneten Schleifscheibe gemäß zumindest einer der hierin beschriebenen Ausgestaltungen bestückt ist.

Gemäß einem weiteren Aspekt bezieht sich die vorliegende Offenbarung auf die Verwendung einer zum elektroerosiven Abrichten geeigneten Schleifscheibe gemäß zumindest einer der hierin beschriebenen Ausgestaltungen zur Schleifbearbeitung mit einer Schleifmaschine. Bei der Schleifbearbeitung kann es sich beispielhaft um ein Außenschleifen/Außenrundschleifen, ein Innenschleifen/Innenrundschleifen und/oder um ein Unrundschleifen handeln. Beispielhaft lässt sich die Schleifscheibe zur Schleifbearbeitung von harten Metallwerkstoffen, Hartmetallen, keramischen Werkstoffen, Titanwerkstoffen und ähnlichem nutzen. Damit können aus Sicht des Schleifprozesses gegebenenfalls problematische Werkstoffe mit hoher Abtragsleistung, hoher Maßhaltigkeit und hoher Oberflächengüte bearbeitet werden.

Gemäß einer beispielhaften Ausgestaltung weist die Schleifmaschine ferner eine elektroerosive Abrichtvorrichtung zum Abrichten der Schleifscheibe auf, die insbesondere als Draht-Elektroerosions-Abrichtvorrichtung gestaltet ist. Auf diese Weise wird die Schleifmaschine um die Fähigkeit zur Abrichtung ertüchtigt. Wenn die Abrichtvorrichtung in die Schleifmaschine integriert ist, können Bewegungsachsen der Schleifmaschine zu Erzeugung der Relativbewegung zwischen der Schleifscheibe und dem (vorbeilaufenden) Abrichtdraht erzeugt werden, um die gewünschte Kontur an der Oberfläche des Schleifbelags zu erzeugen.

Es versteht sich, dass die elektroerosive Abrichtvorrichtung auch anderweitig in die Schleifmaschine integrierbar ist. Dies umfasst beispielsweise Gestaltungen, bei der eine separate Kinematik für die elektroerosive Abrichtvorrichtung vorgesehen ist, die unabhängig von der Maschinenkinematik der Schleifmaschine ist, beispielsweise ein separater Kreuzschlitten. Gemäß einer weiteren Ausgestaltung ist die elektroerosive Abrichtvorrichtung als separate Vorrichtung gestaltet, die bedarfsweise mit der Schleifmaschine bzw. mit deren Schleifscheibe koppelbar ist. Gegebenenfalls wird die Schleifscheibe von der Schleifmaschine gelöst, um in der Abrichtvorrichtung abgerichtet zu werden.

Gemäß einem weiteren Aspekt bezieht sich die vorliegende Offenbarung auf die Verwendung einer elektroerosiven Abrichtvorrichtung, die insbesondere als Draht-Elektroerosions-Abrichtvorrichtung gestaltet ist, zum Abrichten einer Schleifscheibe gemäß zumindest einer der hierin beschriebenen Ausgestaltungen. Die elektroerosive Abrichtvorrichtung kann in eine Schleifmaschine integriert sein oder als Stand-Alone-Vorrichtung unabhängig von einer Schleifmaschine gestaltet sein.

Gemäß einem weiteren Aspekt bezieht sich die vorliegende Offenbarung auf die Verwendung einer zum elektroerosiven Abrichten geeigneten Schleifscheibe gemäß zumindest einer der hierin beschriebenen Ausgestaltungen zum elektroerosiven Abrichten in einer Schleifmaschine, in die eine elektroerosive Abrichtvorrichtung integriert ist. Auf diese Weise kann in einer Einspannung sowohl eine Schleifbearbeitung von Werkstücken als auch ein hochgenaues Abrichten der Kontur/Oberfläche des Schleifbelags der Schleifscheibe erfolgen. Vorteilhafterweise erzeugt das Abrichten einen Materialabtrag bei der makroskopischen Matrix und einen Materialabtrag bei der mikroskopischen Matrix.

Gemäß einem weiteren Aspekt bezieht sich die vorliegende Offenbarung auf ein Verfahren zum Abrichten einer Schleifscheibe mittels Draht-Elektroerosion, mit den folgenden Schritten:
- Bereitstellung einer Schleifscheibe gemäß zumindest einer der hierin beschriebenen Ausgestaltungen,
- Bereitstellung einer Draht-Elektroerosions-Abrichtvorrichtung mit einem Abrichtdraht und einer Drahtführung,
- Bereitstellung eines Dielektrikums zwischen der Schleifscheibe und dem Abrichtdraht,
- Bewegung des Abrichtdrahts von einem Drahtvorrat entlang der Schleifscheibe,
- rotatorisches Antreiben der Schleifscheibe,
- Erzeugung elektrischer Spannungspulse zwischen der Schleifscheibe und dem Abrichtdraht zu Zwecken des Materialabtrags von der Schleifscheibe, und
- Erzeugung einer Relativbewegung zwischen der Schleifscheibe und dem Abrichtdraht zur Erzeugung einer gewünschten Kontur der Schleifscheibe durch elektroerosiven Abtrag,
wobei der elektroerosive Abtrag ein Lösen einer Teilmenge der Schneidpartikel einzelner Schleifkörner von der Schleifscheibe umfasst.

Im Rahmen des Verfahrens ist es also aufgrund der günstigen Gestaltung der Schleifscheibe mit der makroskopischen Matrix und der mikroskopischen Matrix möglich, innerhalb der in die makroskopische Matrix eingebetteten Schleifkörner Material der mikroskopischen Matrix abzutragen, um einzelne Schneidpartikel vom Schleifkorn zu lösen. Mit anderen Worten können also nicht nur ganze Schleifkörner von dem Schleifbelag gelöst werden. Es ist auch ein gezielter Teilabtrag im Binnenbereich eines Schleifkorns möglich. Die Schneidpartikel können also gegebenenfalls mittelbar durch den elektroerosiven Abtrag gelöst werden. Primär wird der Binder der mikroskopischen Matrix direkt abgetragen, wodurch Schneidpartikel aus der mikroskopischen Matrix herausgelöst werden können.

Während des Abrichtens kann der Abrichtdraht beispielsweise von einer Spule abgewickelt und während der Bewegung gezielt an der Oberfläche des Schleifbelags der Schleifscheibe vorbeigeführt werden. Zusätzlich wird die Schleifscheibe in Rotation versetzt. Sodann wird durch geeignete Verfahrantriebe eine (zusätzliche) Relativbewegung zwischen der Schleifscheibe und dem Abrichtdraht erzeugt, so dass der aktuelle "Wirkbereich" des elektroerosiven Abtrags über die Kontur an der Oberfläche des Schleifbelags wandert. Auf diese Weise lässt sich eine gewünschte Schleifscheibenkontur erzeugen, dies kann auch eine Profilierung umfassen. Ferner lässt sich die Schleifscheibe auf diese Weise schärfen, um einen gewünschten Kornfreistand zu erzeugen. Die Kontur der Schleifscheibe wird mit dem sich bewegenden Abrichtdraht abgefahren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Erfindung ergeben sich aus der nachfolgenden Beschreibung und Erläuterung mehrerer beispielhafter Ausführungsformen unter Bezugnahme auf die Zeichnungen. Es zeigen:
- Fig. 1:: eine schematische Ansicht einer Ausgestaltung einer Schleifmaschine mit Abrichtvorrichtung;
- Fig. 2:: eine vereinfachte, schematische Darstellung einer Abrichtvorrichtung zur Veranschaulichung eines elektroerosiven Abrichtvorgangs mittels Draht-Elektroerosion;
- Fig. 3:: eine seitliche Ansicht einer zum elektroerosiven Abrichten geeigneten Schleifscheibe;
- Fig. 4:: eine vergrößerte, geschnittene Teilansicht der Schleifscheibe gemäß Fig. 3 zur Veranschaulichung eines Schleifbelags mit einer makroskopischen Matrix;
- Fig. 5:: eine auf Fig. 4 basierende schematische Darstellung vergrößerter Schleifkörner zur Veranschaulichung einer jeweiligen mikroskopischen Matrix innerhalb der Schleifkörner;
- Fig. 6:: eine auf den Figuren 3-5 beruhende vergrößerte, geschnittene Teilansicht einer abgerichteten Schleifscheibe mit Materialabtrag von Schneidpartikeln innerhalb der mikroskopischen Matrix an der Oberfläche des Schleifbelags;
- Fig. 7:: anhand einer vergrößerten, geschnittenen Teilansicht eine von den Figuren 3-6 abweichende Gestaltung einer Schleifscheibe mit ausschließlich makroskopischer Matrix und dort eingebetteten Schleifkörnern; und
- Fig. 8:: ein schematisch stark vereinfachtes Blockdiagramm zur Veranschaulichung einer beispielhaften Ausführungsform eines Verfahrens zum Abrichten einer Schleifscheibe mittels Draht-Elektroerosion.

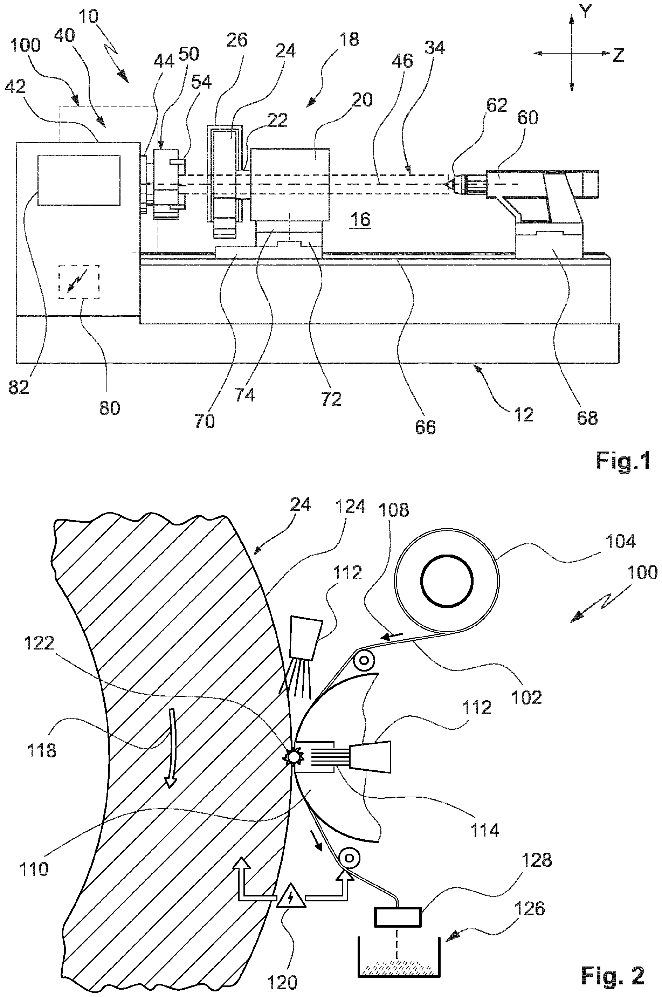

Fig. 1 veranschaulicht anhand einer schematischen Darstellung eine beispielhafte Ausgestaltung einer insgesamt mit 10 bezeichneten Schleifmaschine. Es versteht sich, dass Schleifmaschinen auch von der Darstellung gemäß Fig. 1 abweichende Gestaltungen aufweisen können. Die Darstellung der Schleifmaschine 10 gemäß Fig. 1 ist exemplarischer Natur und daher nicht einschränkend zu verstehen. Die Schleifmaschine 10 ist hier als Rundschleifmaschine gestaltet.

In Fig. 1 ist ein kartesisches Koordinatensystem X, Y, Z angedeutet, wobei lediglich die Achsen Y und Z explizit gezeigt sind. Die X-Achse ist senkrecht zur Ansichtsebene von Fig. 1 orientiert. Die Z-Achse ist parallel zur Längsachse des Werkstücks bzw. etwaiger Werkstückspindeln. Die Y-Achse ist in Fig. 1 vertikal orientiert und beschreibt eine Höhenerstreckung senkrecht zur Z-Achse. Die X-Achse ist in Fig. 1 (senkrecht zur Ansichtsebene) horizontal orientiert und beschreibt eine Tiefenerstreckung (Zustellrichtung). Rotationen um die X-Achse sind einer rotatorischen A-Achse zugeordnet. Rotationen um die Y-Achse sind einer rotatorischen B-Achse zugeordnet. Rotationen um die Z-Achse sind einer rotatorischen C-Achse zugeordnet. Das Koordinatensystem X, Y, Z dient nachfolgend insbesondere zur Veranschaulichung von Ausführungsbeispielen und Merkmalen und ist nicht einschränkend zu verstehen. Der Fachmann kann gegebenenfalls erforderliche Transformationen ohne weiteres vornehmen.

Die Schleifmaschine 10 umfasst eine Basis 12, die auch als Gestell bezeichnet werden kann. Die Basis 12 trägt eine Schleifspindeleinheit 18, die einen Spindelstock 20 mit einer Schleifspindel 22 aufweist. An der Schleifspindel 22 ist eine Schleifscheibe 24 aufgenommen. Die Schleifscheibe 24 ist durch die Schleifspindel 22 rotatorisch antreibbar. In Fig. 1 ist ferner eine Haube 26 für die Schleifscheibe 24 angedeutet, die auch als Schutzhaube bezeichnet werden kann. Mit der Schleifscheibe 24 kann in einem Arbeitsraum 16 der Werkzeugmaschine 10 ein Werkstück bearbeitet werden. Werkzeugmaschinen 10 weisen üblicherweise eine den Arbeitsraum 16 und gegebenenfalls weitere Komponenten umschließende Einhausung auf, die in Fig. 1 nicht gezeigt ist.

Mit der Schleifscheibe 24 kann ein Werkstück 34 bearbeitet werden. Im Ausführungsbeispiel ist die Schleifspindeleinheit 18 mit der Schleifscheibe 24 in der durch die Achsen X und Z gebildeten Ebene relativ zum Werkstück 34 verfahrbar. Dies kann beispielhaft über einen Kreuzschlitten, einen T-Schlitten oder in ähnlicher Weise erfolgen. Auf diese Weise sind Zustellbewegungen, Vorschubbewegungen, Einstechbewegung und Ähnliches möglich. In beispielhaften Ausgestaltungen ist die Schleifspindeleinheit 18 mit der Schleifscheibe 24 zusätzlich um die Y-Achse verschwenkbar. Diese Funktionalität wird als B-Achse bezeichnet. Auf diese Weise kann die Schleifscheibe 24 schräg gegenüber dem Werkstück 34 angestellt werden, wenn dies erforderlich ist. Diese Achskonfiguration und die damit einhergehenden Bewegungsfreiheitsgrade dienen lediglich zur Veranschaulichung denkbarer Ausführungsbeispiele und sind nicht einschränkend zu verstehen. In einem weiteren Ausführungsbeispiel ist eine sogenannte A-Achse vorgesehen, also eine Verkippung zwischen der Drehachse der Schleifscheibe 24 und dem Werkstück 34 bzw. dessen Längsachse Z. Eine solche Verkippung erlaubt beispielsweise die Bearbeitung von Steigungen, etwa für Gewinde und ähnliche Bauteile.

Die Schleifmaschine 10 umfasst ferner eine Werkstückspindeleinheit 40. Die Werkstückspindeleinheit 40 umfasst einen Spindelstock 42, der eine Werkstückspindel 44 beherbergt. Die Werkstückspindel 44 ist um eine Längsachse 46 rotatorisch antreibbar. Die Drehbewegung der Werkstückspindel 44 kann einerseits eine Rotation mit bestimmter Drehzahl umfassen. Ferner kann die Werkstückspindel 44 gezielt auch in bestimmten Drehorientierungen um die Längsachse 46 positioniert werden (C-Achse).

Die Werkstückspindel 44 trägt einen Werkstückhalter 50. Im Ausführungsbeispiel gemäß Fig. 1 umfasst der Werkstückhalter 50 ein Spannfutter 54. Das Spannfutter 54 weist beispielhaft Spannbacken oder dergleichen auf, um das Werkstück 34 zu greifen und festzuhalten. Das Werkstück 34 ist im Ausführungsbeispiel derart am Werkstückhalter 50 aufgenommen, dass dessen Rotationsachse mit der Längsachse 46 zusammenfällt. Das Spannfutter 54 ist beispielhaft als Ausgleichsfutter oder als zentrierendes Futter gestaltet. Andere Gestaltungen von Werkstückhaltern 50 sind grundsätzlich auch denkbar, etwa als angetriebene Spitze oder als stehende Spitze mit separatem Mitnehmer.

In dem in Fig. 1 veranschaulichten Ausführungsbeispiel ist der Werkstückspindel 44 mit dem Werkstückhalter 50 gegenüberliegend ein weiterer Werkstückhalter 62 angeordnet, der Bestandteil eines Reitstocks 60 oder einer Gegenspindel sein kann. Ein Reitstock dient in erster Linie zur Zentrierung, Abstützung und Lagerung. Eine Gegenspindel kann mit eigenem Antrieb versehen sein. Ähnlich wie der Werkstückhalter 50 kann auch der Werkstückhalter 62 als Spitze, Spannfutter oder dergleichen gestaltet sein. Der Werkstückhalter 50 und der Werkstückhalter 62 sind einander zugewandt, halten das Werkstück 34 und spannen dieses zwischen sich ein. Je nach konkretem Anwendungsfall und Bearbeitungszweck ist eine Aufnahme des Werkstücks 34 grundsätzlich mit stehender Spitze oder rotierender Spitze denkbar. Eine stehende Spitze rotiert nicht, wenn das Werkstück 34 rotiert wird. Eine rotierende Spitze bewegt sich gemeinsam mit dem Werkstück 34.

Es versteht sich, dass insbesondere bei kurzen Werkstücken 34 (solche mit geringem Längen-Durchmesser-Verhältnis) auf den gegenüberliegenden Werkstückhalter 62 verzichtet werden kann. Die Darstellung in Fig. 1 dient lediglich zur Veranschaulichung und ist nicht einschränkend zu verstehen.

Das Ausführungsbeispiel zeigt ferner eine Z-Führung 66, die an der Basis 12 ausgebildet ist. Die Basis 12 trägt einen Z-Schlitten 68 für den Reitstock 60. Der Z-Schlitten 68 ist an der Z-Führung 66 in der Z-Richtung verfahrbar. Auf diese Weise kann der Abstand zwischen dem Werkstückhalter 50 und dem Werkstückhalter 62 variiert werden. Die Schleifspindeleinheit 18 ist im Ausführungsbeispiel ebenso über einen Z-Schlitten 70 in der Z-Achse verfahrbar angeordnet. In der Darstellung gemäß Fig. 1 ist der Z-Schlitten 70 ebenso an der Z-Führung 66 angeordnet. Es versteht sich, dass alternativ auch eine parallele Z-Führung an der Basis 12 angeordnet sein kann, die von der Z-Führung 66 beabstandet ist.

Der Z-Schlitten 70 ist im Ausführungsbeispiel mit einem X-Schlitten 72 gekoppelt. Der X-Schlitten 72 ist relativ zum Z-Schlitten 70 verfahrbar, im Ausführungsbeispiel gemäß Fig. 1 in einer Richtung senkrecht zur Ansichtsebene. Gemeinsam bilden der X-Schlitten 72 und der Z-Schlitten 70 einen Kreuzschlitten. Neben der Kreuzschlittenbauweise ist beispielhaft auch die Gestaltung mit einem sogenannten T-Bett vorstellbar. Bei einem T-Bett ist die Z-Achse eine Werkstück-Achse. Bei der Z-Bewegung wird also bei einem T-Bett nicht die Schleifscheibe 24 sondern das Werkstück 34 entlang der Z-Achse bewegt. Dies ist nicht einschränkend zu verstehen. Andere Maschinenkinematiken sind denkbar.

Mit dem Bezugszeichen 74 ist in Fig. 1 ferner eine sogenannte B-Achse angedeutet. Die B-Achse erlaubt eine Schwenkbewegung des Spindelstocks 18 und folglich der Schleifscheibe 24 um die Y-Achse. Auf diese Weise kann die Schleifscheibe 24 schräg gegenüber dem Werkstück 34 orientiert werden. Die in Fig. 1 veranschaulichte Ausgestaltung erlaubt notwendige Zustellbewegungen, Einstechbewegungen und Vorschubbewegungen der Schleifscheibe 24 in Bezug auf das zwischen den Werkstückhaltern 50, 62 eingespannte Werkstück 34.

Ferner ist mit 80 eine Steuereinheit zur Steuerung der Schleifmaschine 10 angedeutet. Insbesondere handelt es sich bei der Steuereinheit 80 um eine Einheit zur NC-basierten oder CNC-basierten Steuerung der Schleifmaschine 10. Daneben ist beispielhaft eine mit 82 bezeichneten Bedienerschnittstelle vorgesehen. Die Bedienerschnittstelle 82 umfasst Eingabeelemente und Ausgabeelemente. Es versteht sich, dass die Schleifmaschine 10 auch über externe Steuereinheiten steuerbar ist. Ferner sind Ausgestaltungen mit verteilter Steuerung bekannt, bei denen bestimmte Steuerungsaufgaben von in die Schleifmaschine 10 integrierten Einheiten und andere Steuerungsaufgaben von externen Einheiten ausgeführt werden.

In Fig. 1 ist ferner durch eine gestrichelte Linie eine Abrichtvorrichtung 100 angedeutet, die in die Werkzeugmaschine 10 integriert ist. Bei der Abrichtvorrichtung 100 handelt es sich insbesondere um eine Vorrichtung zum Abrichten mittels Draht-Elektroerosion. Wenn die Abrichtvorrichtung 100 in die Werkzeugmaschine 10 baulich integriert ist, können Bewegungsfreiheitsgrade (Verfahrachsen) der Werkzeugmaschine 10 genutzt werden, um beim Abrichten gewünschte Relativbewegungen zwischen der Abrichtvorrichtung 100 und der Schleifscheibe 24 zu erzeugen. Die Schleifscheibe 24 kann in derselben Aufspannung abgerichtet werden, in der auch die Bearbeitung des Werkstücks 34 erfolgt.

Fig. 2 veranschaulicht anhand einer schematisch stark vereinfachten Darstellung die Funktion der Abrichtvorrichtung 100. In Fig. 2 ist lediglich ein Umfangsabschnitt der Schleifscheibe 24 geschnitten dargestellt, um ein Abrichten durch elektroerosiven Abtrag an einer Oberfläche 124 der Schleifscheibe 24 zu veranschaulichen. Die Abrichtvorrichtung 100 nutzt einen Abrichtdraht 102. Der Abrichtdraht 102 dient als Elektrode. Der Abrichtdraht 102 wird in einem Drahtvorrat 104 bereitgestellt, beispielsweise in einer Drahtspule. Ein mit 108 bezeichneter Pfeil veranschaulicht eine Bewegung des Abrichtdraht des 102 weg vom Drahtvorrat 104 und entlang der Schleifscheibe 24. Der Abrichtdraht 102 wird entlang einer Drahtführung 110 geführt, die benachbart zur Schleifscheibe 24 gegebenenfalls eine Aussparung aufweist, so dass dort der Abrichtdraht 102 frei entlang der Schleifscheibe 24 bewegt werden kann. Die Bewegung des Abrichtdrahts 102 entlang der Schleifscheibe 24 erfolgt unter Beibehaltung eines kleinen Spalts. Es gibt also üblicherweise keinen direkten Kontakt zwischen dem Abrichtdraht 102 an der Schleifscheibe 24.

In Fig. 2 sind ferner mit 112 Düsen einer Zuführung für ein dielektrisches Spülmedium schematisch dargestellt. Das Abrichten mittels Draht-Elektroerosion erfordert die Bereitstellung eines Dielektrikums 114, beispielsweise durch Zuführung eines dielektrischen Spülmediums über die Düsen 112. Während des Abrichtens wird die Schleifscheibe 24 rotatorisch angetrieben, vergleiche einen mit 118 bezeichneten Pfeil in Fig. 2. Über eine Stromzuführung 120 werden Pulse (Strompulse) zwischen der Schleifscheibe 24 und dem Abrichtdraht 102 erzeugt. Durch eine resultierende Funkenentladung zwischen der Schleifscheibe 24 und dem Abrichtdraht 102 wird Material von der Oberfläche 124 der Schleifscheibe 24 abgetragen. Dies betrifft üblicherweise einen leitfähigen Binder, in den Schleifkörner eingebettet sind. Mit anderen Worten werden also die Schleifkörner üblicherweise nicht direkt abgetragen. Die Schleifkörner können von der Oberfläche 124 der Schleifscheibe 24 gelöst werden, wenn umgebendes Material abgetragen ist.

Im Ausführungsbeispiel gemäß Fig. 2 wird der verbrauchte Abrichtdraht 102 einer Drahtentsorgung 126 zugeführt, wie beispielsweise einen Drahtschneider 128 zum Zerkleinern des verbrauchten Abrichtdrahts 102 aufweist.

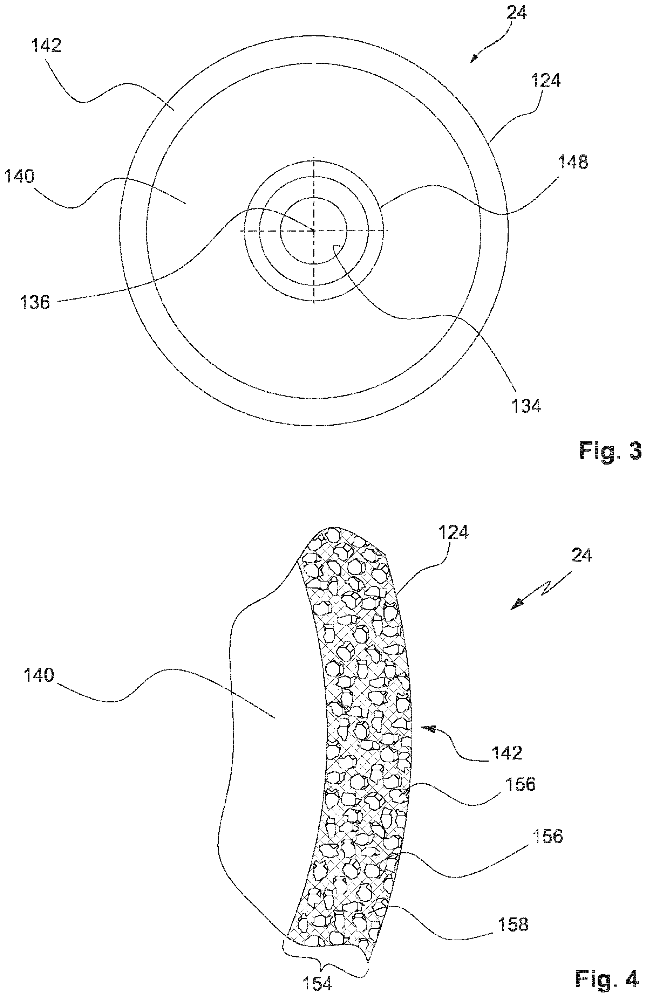

Fig. 3 veranschaulicht anhand einer seitlichen Ansicht eine mit 24 bezeichnete Schleifscheibe. Die Schleifscheibe 24 dient beispielsweise zum Rundschleifen, insbesondere zum Außenrundschleifen von Werkstücken. Dies ist nicht einschränkend zu verstehen.

Die Schleifscheibe 24 weist eine Mittenbohrung 134 zur Aufnahme an einer Schleifspindel 22 auf. Die Schleifscheibe 24 kann um eine Drehachse 136 rotatorisch angetrieben werden. Die Schleifscheibe weist einen Grundkörper 140 auf, der einen Schleifbelag 142 trägt. Mit dem Schleifbelag 142 erfolgt die eigentliche Bearbeitung. Der Schleifbelag 142 wird mittels der Abrichtvorrichtung 100 (vergleiche Fig. 2) abgerichtet. Dies kann zum einen der Erzeugung einer gewünschten Kontur an der Oberfläche 124 der Schleifscheibe 24 dienen. Mit anderen Worten kann die Schleifscheibe 24 profiliert werden. Das Abrichten kann jedoch auch dann erforderlich sein, wenn die Schleifscheibe 24 nach einer bestimmten Standzeit wieder geschärft werden muss.

Die Schleifscheibe 24 weist ferner eine Kontaktierung 148 auf, über die beispielsweise mit einem Schleifkontakt zur Erzeugung der Funkenentladung ein Stromkreis geschlossen werden kann. Mit anderen Worten ist die Kontaktierung 148 leitfähig mit dem Schleifbelag 142 verbunden, damit an der Oberfläche 124 des Schleifbelags 142 Material mittels drahterosivem Abrichten abgetragen werden kann.

Fig. 4 zeigt eine vergrößerte Teilansicht der Schleifscheibe 24 gemäß Fig. 3. Insbesondere ist der Schleifbelag 142 auf dem Grundkörper 140 geschnitten dargestellt. Der Schleifbelag 142 weist eine makroskopische Matrix 154 auf, in die eine Vielzahl von Schleifkörnern 156 eingebettet ist. Mit anderen Worten umfasst die makroskopische Matrix 154 einen leitfähigen Binder 158, der Zwischenräume zwischen den Schleifkörnern 156 ausfüllt. Beim elektroerosiven Abrichten mit dem Abrichtdraht 102 (Fig. 2) wird das Material des Binders 158 abgetragen, wodurch nach und nach (außen liegende) Schleifkörner 156 vom Schleifbelag 142 gelöst werden können. Auf diese Weise kann die Schleifscheibe 24 nachgeschärft bzw. profiliert werden. Ferner lassen sich gewünschte Profilierungen und/oder die gewünschte Form der Schleifscheibe 24 erzeugen.

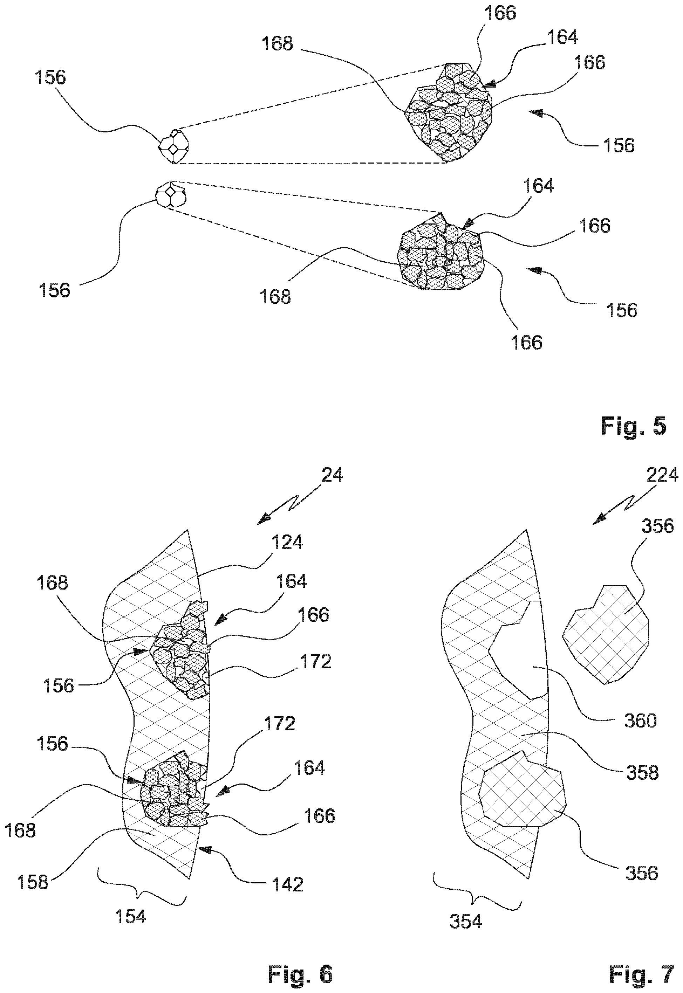

Fig. 5 veranschaulicht anhand einer schematischen Darstellung einzelne Schleifkörner 156 des Schleifbelags 142 der Schleifscheibe 24 gemäß Fug. 3 zunächst in einer etwa der Fig. 4 entsprechenden Darstellung sowie zusätzlich jeweils eine vergrößerte geschnittene Ansicht zur Veranschaulichung der Binnenstruktur der Schleifkörner 156. Mit anderen Worten sind die Schleifkörner 156 in Fig. 5 in zwei unterschiedlichen Maßstäben (sowie einmal nicht geschnitten und einmal geschnitten) dargestellt. Der Vergrößerungsfaktor beträgt etwa 3:1.

Fig. 5 veranschaulicht schematisch, dass die in Fig. 4 gezeigten Schleifkörner 156, die in die makroskopische Matrix 154 des Schleifbelags 142 eingebettet sind, wiederum eine Matrix 164 aufweisen, die als mikroskopische Matrix bezeichnet wird. Mit anderen Worten weisen die Schleifkörner 156 jeweils eine Mehrzahl oder Vielzahl von Schneidpartikeln 166 auf. Diese Schneidpartikel 166 sorgen schlussendlich bei der Schleifbearbeitung mit der Schleifscheibe 24 für den Materialabtrag beim Werkstück 34 (vergleiche Fig. 1).

Die Schneidpartikel 166 sind in einen Binder 168 der mikroskopischen Matrix 164 eingebettet. Der Binder 168 füllt in den Schleifkörnern 156 Zwischenräume zwischen den einzelnen Schneidpartikeln 166 aus. Mit anderen Worten können die Schleifkörner 156 aufgrund ihrer Binnenstruktur beispielsweise als polykristalline Schleifkörner 156 bezeichnet werden.

Die Schleifkörner 156 weisen eine erste Körnung auf, die auch als makroskopische Körnung bezeichnet werden kann. Die Schneidpartikel 166 innerhalb der Schleifkörner 165 weisen eine zweite Körnung auf, die auch als mikroskopische Körnung bezeichnet werden kann. Die Korngröße der Schleifkörner 156 ist um ein Mehrfaches oder Vielfaches größer als die Korngröße der Schneidpartikel 166. Mit anderen Worten braucht es eine Mehrzahl oder Vielzahl von Schneidpartikeln 166, um ein Schleifkorn 156 zu bilden. Der Binder 168 der mikroskopischen Matrix 164 ist leitfähig. Auf diese Weise kann beim elektroerosiven Abrichten auch innerhalb der Schleifkörner 156 Material abgetragen werden. Wenn nun um einzelne der Schneidpartikel 166 in der mikroskopischen Matrix 164 Binder 168 abgetragen ist, können die Schneidpartikel 166 aus der Matrix 164 gelöst werden.

In der makroskopischen Matrix 154 beanspruchen die Schleifkörner 156 einen bestimmten Volumenanteil. Das verbleibende Volumen wird üblicherweise vom (makroskopischen) Binder 158 ausgefüllt. In der mikroskopischen Matrix 164 beanspruchen die Schneidpartikel 166 einen bestimmten Volumenanteil. Das verbleibende Volumen wird üblicherweise vom (mikroskopischen) Binder 168 ausgefüllt.

Fig. 6 veranschaulicht eine vergrößerte Teilansicht einer Schleifscheibe 24 mit einzelnen Schleifkörnern 156, die in die makroskopische Matrix 154 eingebettet und bei der Oberfläche 124 des Schleifbelags 142 angeordnet sind. Fig. 5 zeigt die Körner 156 in ihrem Ursprungszustand. Fig. 6 zeigt nun einen Zustand, bei dem einzelne der Schneidpartikel 166 gelöst sind. Dies kann gegebenenfalls zu (mikroskopischen) Leerstellen 172 in der mikroskopischen Matrix 164. Insgesamt sind die Schleifkörner 156 sehr gut an die sich durch das Abrichten ergebende Oberfläche 124 der Schleifscheibe 24 angepasst. Vor allem wird ein Zustand vermieden, bei dem einzelne Schleifkörner prominent über die (Soll-) Oberfläche 124 der Schleifscheibe 24 hinausragen. Mit der in den Figuren 3-6 gezeigten Gestaltung der Schleifscheibe 24 lassen sich hohe Oberflächenqualitäten bei der Bearbeitung erzielen.

Hingegen veranschaulicht Fig. 7 vergleichend einen Ausschnitt einer mit 224 bezeichneten Schleifscheibe, bei der zwar eine makroskopische Matrix 354 mit dort eingebetteten Schleifkörnern 356 und leitfähigen Binder 358 gegeben ist, bei der aber die einzelnen Schleifkörner 356 keine mikroskopische Matrix mit leitfähigem Binder aufweisen. Daher können die Schleifkörner 356 beim elektroerosiven Abrichten individuell nur als Ganzes in der Schleifscheibe 224 verbleiben oder unter Ausbildung von Leerstellen 360 gelöst werden. Dies führt jedoch im Vergleich zur Gestaltung der Schleifscheibe 24 gemäß Fig. 6 zu deutlich größeren Abweichungen von der gewünschten Soll-Geometrie, wodurch bei der Bearbeitung von Werkstücken mit der Schleifscheibe 224 die Oberflächenqualität sinkt.

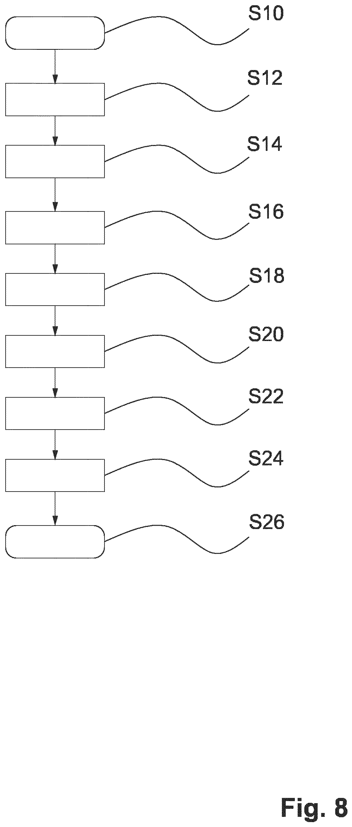

Fig. 8 veranschaulicht anhand eines schematisch dargestellten Blockdiagramms eine beispielhafte Ausgestaltung eines Verfahrens zum Abrichten einer Schleifscheibe mittels Draht-Elektroerosion. Das Verfahren beginnt bei einem Schritt S10.

Ein Schritt S12 bezieht sich auf die Bereitstellung einer Offenbarungsgemäß gestalteten Schleifscheibe, die einen Schleifbelag mit einer makroskopischen Matrix mit einem leitfähigen Binder sowie darin eingebetteten Schleifkörnern sowie auf der Ebene der Schleifkörner eine mikroskopische Matrix mit einem leitfähigen Binder sowie darin eingebetteten (Mikro-) Schneidpartikeln aufweist. Mit einer solchen Schleifscheibe kann beispielhaft eine Schleifspindel einer Schleifmaschine bestückt werden.

Ein Schritt S14 bezieht sich auf die Bereitstellung einer Abrichtvorrichtung, die beispielsweise zum elektroerosiven Abrichten mittels Draht-Elektroerosion gestaltet ist. In beispielhaften Ausgestaltungen ist die Abrichtvorrichtung baulich in die Schleifmaschine integriert. In alternativen Ausgestaltungen ist die Abrichtvorrichtung als Stand-Alone Vorrichtung ohne unmittelbare Integration in die Schleifmaschine gestaltet. Die Abrichtvorrichtung weist beispielhaft einen Drahtvorrat für einen Abrichtdraht sowie eine Drahtführung auf, entlang der der Abrichtdraht bewegt werden kann. Bei dieser geführten Bewegung ist der Abrichtdraht an die Schleifscheibe angenähert, um dort mittels Funkenentladung Material abzutragen.

Ein weiterer Schritt S16 bezieht sich auf die Bereitstellung eines Dielektrikums, beispielsweise eines dielektrischen Spülmediums, das über Düsen ausgebracht wird. Das Dielektrikum ist notwendig für den gewünschten Materialabtrag.

Ein weiterer Schritt S18 bezieht sich auf die Bewegung des Abrichtdrahtes vom Drahtvorrat entlang der Schleifscheibe in einer Nachbarschaftsbeziehung zur Schleifscheibe, so dass zwischen dem Abrichtdraht und der Schleifscheibe nur ein kleiner Spalt verbleibt. Während dieser Bewegung wird der Abrichtdraht üblicherweise durch eine Drahtführung geführt. Ein weiterer Schritt S20 bezieht sich auf einen rotatorischen Antrieb der Schleifscheibe.

In einem weiteren Schritt S22 werden gezielt elektrische Impulse zwischen dem Abrichtdraht (Elektrode) und der Schleifscheibe erzeugt, um dort mittels Funkenentladung Material abzutragen.

Ein Schritt S24 beschreibt die Erzeugung einer Relativbewegung, die üblicherweise dem Schritt S22 überlagert ist. Auf diese Weise lassen sich zwischen dem Abrichtdraht und der Schleifscheibe Zustellbewegungen und Vorschubbewegungen erzeugen, so dass beim Abrichten an der Schleifscheibe eine gewünschte Kontur durch elektroerosiven Abtrag erzeugt wird.

Das Verfahren endet bei einem Schritt S26. Insgesamt erlaubt das Verfahren ein hochgenaues Abrichten, weil nicht nur auf der Ebene der makroskopischen Matrix, sondern auch auf der Ebene der mikroskopischen Matrix Material mittels Draht-Elektroerosion abgetragen wird. Damit sinkt die Wahrscheinlichkeit, dass einzelne Schleifkörner prominent über die Oberfläche der Schleifscheibe überstehen. Dies führt insgesamt zu einer verbesserten Oberflächengüte bei der anschließenden Schleifbearbeitung mit der Schleifscheibe.

Es versteht sich, dass im Rahmen der vorliegenden Offenbarung beschriebene Ausführungsformen der Schleifscheibe, der Abrichtvorrichtung sowie der Schleifmaschine bei weiteren Ausgestaltungen des offenbarungsgemäßen Verfahrens berücksichtigt werden können. Dies gilt umgekehrt für im Rahmen der vorliegenden Offenbarung beschriebene Ausführungsformen des Abrichtverfahrens, die wiederum bei Ausgestaltungen der Schleifscheibe, der Abrichtvorrichtung sowie der Schleifmaschine berücksichtigt werden können. Dass eine konkrete Ausgestaltung in Zusammenhang mit einer Vorrichtung oder einem Verfahren beschrieben wurde, steht der Anwendung bei der jeweils anderen Kategorie nicht entgegen. Solche Kombinationen sind ausdrücklich von der vorliegenden Offenbarung umfasst.

## Patentansprüche

1. Schleifscheibe (24), insbesondere zum elektroerosiven Abrichten geeignete Schleifscheibe (24), die Folgendes aufweist:
- eine Mittenachse (136), um die die Schleifscheibe (24) rotierbar ist, und
- einen Schleifbelag (142) mit einer makroskopischen Matrix (154), in die Schleifkörner (156) eingebettet sind,
wobei die makroskopische Matrix (154) leitfähig ist,
**dadurch gekennzeichnet, dass**
die Schleifkörner (156) eine leitfähige mikroskopische Matrix (164) aufweisen, in die Schneidpartikel (166) eingebettet sind.

2. Schleifscheibe (24) nach Anspruch 1, wobei die makroskopische Matrix (154) einen leitfähigen Binder (158), insbesondere eine Metallbindung oder eine leitfähige Hybridbindung, mit eingebetteten Schleifkörnern (156) aufweist.

3. Schleifscheibe (24) nach Anspruch 1 oder 2, wobei die mikroskopische Matrix (164) innerhalb eines Schleifkorns (156) mehre Schneidpartikel (166) aufweist, die durch einen elektrisch leitenden Binder (168) miteinander verbunden sind.

4. Schleifscheibe (24) nach Anspruch 3, wobei der elektrisch leitende Binder (168) der mikroskopischen Matrix (164) ein Metall, Halbmetall oder Übergangsmetall aufweist.

5. Schleifscheibe (24) nach Anspruch 3 oder 4, wobei der elektrisch leitende Binder (168) der mikroskopischen Matrix (164) Bor oder Kobalt aufweist.

6. Schleifscheibe (24) nach einem der Ansprüche 1-5, wobei die Schleifkörner (156) als polykristallines Korn gestaltet sind.

7. Schleifscheibe (24) nach Anspruch 6, wobei die Schleifkörner (156) als polykristallines Diamantkorn und/oder polykristallines kubisches Bornitridkorn gestaltet sind.

8. Schleifscheibe (24) nach einem der Ansprüche 1-7, wobei die Schleifkörner (156) in der makroskopischen Matrix (154) eine erste Korngröße aufweisen, wobei die Schneidpartikel (166) innerhalb der Schleifkörner (156) eine zweite Korngröße aufweisen, und wobei der erste Korngröße größer als die zweite Korngröße ist, insbesondere wobei die erste Korngröße mindestens das Dreifache der zweiten Korngröße beträgt.

9. Schleifscheibe (24) nach Anspruch 8, wobei die erste Korngröße eine Körnung von mindestens 20 Mikrometer, vorzugsweise eine Körnung von mindestens 35 Mikrometer, weiter bevorzugt eine Körnung von mindestens 50 Mikrometer aufweist.

10. Schleifscheibe (24) nach Anspruch 8 oder 9, wobei die zweite Korngröße eine Körnung von maximal 10 Mikrometer, vorzugsweise eine Körnung von maximal 5 Mikrometer, weiter bevorzugt eine Körnung von maximal 3 Mikrometer aufweist.

11. Schleifscheibe (24) nach einem der Ansprüche 1-10, wobei ein Volumenanteil der Schleifkörner (156) an der makroskopischen Matrix (154) mindestens 30 Vol.-%, vorzugsweise mindestens 50 Vol.-% beträgt.

12. Schleifscheibe (24) nach einem der Ansprüche 1-11, wobei ein Volumenanteil der Schneidpartikel (166) an der mikroskopischen Matrix (164) mindestens 50 Vol.-%, vorzugswiese mindestens 70 Vol.-% beträgt.

13. Schleifmaschine (10), insbesondere Rundschleifmaschine, mit einer um eine Längsachse (46) rotierbaren Werkstückspindel (44) zur Aufnahme eines Werkstücks (34) und einer um eine Drehachse (136) rotierbaren Schleifspindel (22), wobei die Schleifspindel (22) mit einer zum elektroerosiven Abrichten geeigneten Schleifscheibe (24) gemäß einem der Ansprüche 1-12 bestückt ist, wobei die Schleifmaschine insbesondere eine elektroerosive Abrichtvorrichtung (100) zum Abrichten der Schleifscheibe (24) aufweist, die vorzugsweise als Draht-Elektroerosions-Abrichtvorrichtung gestaltet ist.

14. Verwendung einer elektroerosiven Abrichtvorrichtung (100), die insbesondere als Draht-Elektroerosions-Abrichtvorrichtung gestaltet ist, zum Abrichten einer Schleifscheibe (24) nach einem der Ansprüche 1-12.

15. Verfahren zum Abrichten einer Schleifscheibe (24) mittels Draht-Elektroerosion, mit den folgenden Schritten:
- Bereitstellung einer Schleifscheibe (24) nach einem der Ansprüche 1-12,
- Bereitstellung einer Draht-Elektroerosions-Abrichtvorrichtung (100) mit einem Abrichtdraht (102) und einer Drahtführung (110),
- Bereitstellung eines Dielektrikums zwischen der Schleifscheibe (24) und dem Abrichtdraht,
- Bewegung des Abrichtdrahts (102) von einem Drahtvorrat (104) entlang der Schleifscheibe (24),
- rotatorisches Antreiben der Schleifscheibe (24),
- Erzeugung elektrischer Spannungspulse zwischen der Schleifscheibe (24) und dem Abrichtdraht (102) zu Zwecken des Materialabtrags von der Schleifscheibe (24), und
- Erzeugung einer Relativbewegung zwischen der Schleifscheibe (24) und dem Abrichtdraht (102) zur Erzeugung einer gewünschten Kontur der Schleifscheibe (24) durch elektroerosiven Abtrag,
wobei der elektroerosive Abtrag ein Lösen einer Teilmenge der Schneidpartikel (166) einzelner Schleifkörner (156) von der Schleifscheibe (24) umfasst.
